# EUROPÄISCHE PATENTSCHRIFT

(11) **EP 3 004 679 B1**
(45) Veröffentlichungstag und Bekanntmachung des Hinweises auf die Patenterteilung: **31.10.2018**
(21) Anmeldenummer: 14727568.9
(22) Anmeldetag: 03.06.2014
(51) Int. Cl.: F16D 51/00

(54) **ELEKTRISCH BETÄTIGBARE TROMMELBREMSE**
DRUM BRAKE WHICH CAN BE OPERATED BY AN ELECTRIC MOTOR
FREIN À TAMBOUR À ACTIONNEMENT ÉLECTRIQUE

(30) Priorität: 06.06.2013 DE 102013210528
(43) Veröffentlichungstag der Anmeldung: 13.04.2016
(73) Patentinhaber: Continental Teves AG & Co. OHG, 60488 Frankfurt am Main (DE)
(72) Erfinder: BACH, Uwe, 65527 Niedernhausen (DE); HOFFMANN, Jens, 64285 Darmstadt (DE); GÖRRISSEN, Niclas, 90478 Nürnberg (DE); RITTER, Wolfgang, 61440 Oberursel/Ts. (DE); SEFO, Ahmed, 65931 Frankfurt (DE); VON HAYN, Holger, 61118 Bad Vilbel (DE)
(86) Internationale Anmeldenummer: PCT/EP2014/061514
(87) Internationale Veröffentlichungsnummer: WO 2014/195329

(56) Entgegenhaltungen:
- EP-A1- 0 402 660
- WO-A2-2012/104395

## Beschreibung

Die vorliegende Erfindung betrifft eine elektrisch betätigte Trommelbremse insbesondere elektromotorisch betätigtes Trommelbremsmodul mit verbesserter Seilzugaktuatoranordnung für Kraftfahrzeuge umfassend einen elektromechanischen Seilzugaktuator, der auf einer Außenseite der Ankerplatte angeordnet ist, zum Antrieb von einem Rot-Trans-Wandler zur Wandlung einer rotatorischen Antriebsdrehbewegung in eine translatorische Betätigungsbewegung (B) von Bremsbacken, die auf einer dem Seilzugaktuator abgewandten Innenseite der Ankerplatte im Inneren einer Bremstrommel angeordnet sind, so dass diese eine Betätigungsbewegung in Richtung Bremstrommel ausführen können, und wobei zwischen Seilzugaktuator und Ankerplatte ein Adapter angeordnet ist.

Eine Trommelbremse kann prinzipiell unterschiedlich nach verschiedenen Konstruktionsprinzipien (Simplex, Duplex, Duo-Duplex, Servo, Duo-Servo) ausgebildet sein. Ein einheitlicher, konstruktiver Vorteil der Trommelbremsen ist deren Selbstverstärkungseffekt in wenigstens eine Drehrichtung, so dass prinzipiell auf einen Bremskraftverstärker verzichtet werden könnte.

Um eine Feststellbremsfunktion elektromechanisch auszuführen, wird üblicherweise zusätzlich zu herkömmlichen, hydraulischen Radbrems-Betätigungsorganen einer Betriebsbremse ein zentraler elektromechanischer Seilzugaktuator vorgesehen, der über einen Elektromotor und ein Untersetzungsgetriebe sowie eine Gewindemutter-Spindel-Anordnung verfügt, die über einen vergleichsweise langen Seilzug wenigstens eine Bremsbacke einer Trommelbremse beaufschlagt. Dadurch wird eine elektromechanische Feststellbremse (EPB) erhalten, die universell für Klein- und Leichtfahrzeuge aber auch für schwere Fahrzeuge geeignet sind, wenn im Bereich der Radbremse wenig Einbauraum zur Anordnung von einem Seilzugaktuator vorliegt.

Zur Ausführung der Feststellbremsfunktion sind weiterhin elektromechanisch betätigbare Feststellbremsen mit einem axial verschiebbar (schwimmend) in einer Führung angeordneten Spreizschloss bekannt. Das Spreizschloss verfügt über zwei translatorisch verschiebbare Betätigungselemente, die die Bremsbacken gegensinnig beaufschlagen. In dem Seilzugaktuator ist jeweils ein Rädergetriebe mit Untersetzungsfunktion integriert vorgesehen, so dass das Spreizschloss direkt auf die Bremsbacken wirkt.

Die bekannten elektromechanisch betätigbaren Trommelbrems-Feststellsysteme sind in Hinblick auf deren Konstruktionsaufwand und Platzbedarf jeweils verbesserungswürdig. Die Parkbrems-Seilzugsysteme mit einem zentralen Seilzugaktuator sind nachteilig, weil bei einem Fahrzeughersteller eine gesonderte Installation und Anlenkung von dem Seilzug an der Radbremse erforderlich ist, so dass die Fertigmontage von Seilzugaktuator, Seilzug und Radbremse erst am Montageband bei dem Fahrzeughersteller erfolgen kann, was die Fertigungstiefe in diesem Bereich erhöht. Fahrzeughersteller wünschen für die Massenproduktion prinzipiell eine besonders rationelle, flexible, modular anpassbare Fahrzeugherstellung mit möglichst geringer Fertigungstiefe. Daneben soll der Funktionsumfang einer Feststellbremse um eine Betriebsbremsfunktion erweitert werden.

Aus der EP 0 920 390 B1 ist daher ein elektromechanisch betätigbares Trommelbremsmodul mit einer besonders geringen Gesamtbaugröße bekannt. Dabei ist ein Außenumfang einer zylindrischen Betätigungseinheit durch eine Öffnung einer Ankerplatte eingeführt. Eine drehbare Antriebsmutter ist über das Motorgehäuse auf einer Trägerplatte abgestützt. Zur Verkürzung von der Baulänge der Betätigungseinheit ist vorgesehen, dass ein Rotor von einem besonders gestalteten Elektromotor eine Spindelanordnung radial außen umgreift und verdrehsicher führt. Diese Bauart erfordert einen vergleichsweise leistungsstark dimensionierten Elektromotor mit speziellem Gehäuse sowie eine speziell angepasste Trägerplatte.

Eine elektromechanisch betätigbare Duo-Servo-Trommelbremse, ohne Seilzuganlenkung, ist aus der EP 594 233 B1 bekannt. Dabei ist ein Elektromotor auf einer Rückseite einer Ankerplatte angeordnet. Die Motorachse ist daher immer rechtwinklig zu einer Drehachse einer Bremstrommel arrangiert und treibt eine drehbar sowie axial unverschiebbar platzierte Gewindespindel an. Die Gewindespindel ist parallel zur Motorachse in der Bremstrommel vorgesehen, und in einem Gehäuse gelagert. Die Gewindespindel steht mit einem axial verschiebbar sowie unverdrehbar im Gehäuse gelagerten Element in Eingriff, das ein Hebelgetriebe beaufschlagt. Diese Bauart erfordert neben einem vergleichsweise leistungsstark dimensionierten Elektromotor noch weitere, sehr speziell ausgebildete, Bauteile und erlaubt daher keine einfache Variation in der Großserie. Heißabstellen ist nicht unproblematisch.

Unterschiedliche Fahrzeuganforderungen sowie unterschiedlich ausnutzbare Einbaubedingungen bei den unterschiedlichen Kraftfahrzeugmodellen erfordern bei den vorbekannten Systemen stark individuelle Anpassungen verschiedenster Bauteile vom Trommelbremsmodul. Es ist daher eine Aufgabe der vorliegenden Erfindung, Lösungsvorschläge anzubieten, die eine besonders einfache und effiziente Adaption eines Trommelbremsmoduls an die verschiedenen, unterschiedlichen Kraftfahrzeugapplikationen in Verbindung mit einem besonders hohen Wirkungsgrad ermöglichen.

Zur Lösung des Problems wird vorgeschlagen, ein Trommelbremsmodul mit einer Ankerplatte und mit einem Adapter zur Fixierung von einem Seilzugaktuator vorzusehen, und wobei weiterhin vorgesehen ist, dass der Adapter als ein gesonderter und dünnwandiger Rahmen mit wenigstens einem Befestigungsflansch zur Aufnahme von dem Seilzugaktuator ausgebildet ist, und wobei der Befestigungsflansch über einen Durchlass für den Seilzug verfügt. Der derart ausgebildete Adapter erlaubt in der Herstellung Aktuatorgehäuse eine Gleichteilestrategie, indem die Gehäuse von den in Fahrtrichtung rechts montierten Radbremsaktuatoren identisch gleich zu den in Fahrtrichtung links montierten Radbremsaktuatoren ausgebildet sind. Die erfindungsgemäße Rahmenbauweise von dem Adapter ermöglicht weiterhin eine hocheffiziente, steife also verlustfreie Modulkonstruktion, weil durch die erfindungsgemäße Seilzugaktuatorabstützung unerwünschte Elastizitäten als auch Reibungsverluste von dem Seilzugaktuator vermieden werden.

Gemäß der Erfindung verfügt der Rahmen seilzugaktuatorseitig über einen ebenen Befestigungsflansch der in Abhängigkeit von den Einbaubedingungen einfach windschief in Relation zu der Ankerplatte anordbar ist ist, ohne ein Aktuatorgehäuse abändern zu müssen, und wobei der Befestigungsflansch einstückig mit mehreren, im Winkel sowie schräg zueinander angeordneten, Streben versehen ist. Durch den grundsätzlich beliebig windschief arrangierbaren Befestigungsflansch wird es ermöglicht, den gebotenen Einbauraum für die Anordnung vom Seilzugaktuator optimal auszunutzen. Dabei können dünne Streben fachwerkartig kombiniert oder alternativ als ebene Stützwände ausgebildet sein, die über biegesteife Knoten jeweils miteinander und/oder mit dem Befestigungsflansch verbunden sind. Wandscheibenartig geschlossene Stützwände verfügen über den Vorteil, dass eine besonders robuste und geschützte Schnittstelle und Seilzugdurchführung zwischen Aktuator und Ankerplatte erhalten wird. Die Stützwände können aber auch mit Aussparungen versehen sein, um Gewichtseinsparung zu ermöglichen. Zur Versteifung vom Rahmen können die ausgebildeten Knoten zusätzlich mit Rippen ausgesteift sein. Zur Krafteinleitung und Abstützung der Streben oder Stützwände enden diese an der Ankerplatte im Wesentlichen parallel zu einer Außenseite der Ankerplatte sowie mit mehreren Abstützarealen, die bei besonders leichtgewichtiger Konstruktion eine einfache, definierte, knickresistente und auch stabile Auflage ermöglichen. Besonders bevorzugt handelt es sich um eine statisch bestimmte Abstützung über drei oder mehr schräg im Raum angeordnete Streben oder Stützwände. Weiterhin bevorzugt ist es möglich, dass die Stützwände oder Streben im Winkel zueinander zwecks Ausbildung eines regelmäßigen oder unregelmäßigen Polyeders zueinander schräg, wie insbesondere pyramidenförmig oder tetraedrisch, arrangiert sind. Durch die derart aufgeteilte Krafteinleitung ist eine besonders effiziente Krafteinleitung zwischen dem Seilzugaktuator und der Ankerplatte ermöglicht. In bevorzugter Ausführungsform ist der Adapter als einstückiges Blechumformteil oder als einstückiges, hitzebeständiges Kunststoffteil vorgesehen.

Zur Verbesserung der Adaption an unterschiedliche Einbaubedingungen bei gleichzeitig über die Lebensdauer konstant gehaltenem Wirkungsgrad des Trommelbremsmoduls ist dem Seilzugaktuator ein Seilzugführungskörper mit einer gekrümmten Seilaufnahme und mit einem U-förmigen Querschnitt zugeordnet. Dieser Seilzugführungskörper kann als gesondertes Bauteil auf einer Innenseite von der Trägerplatte in einer formschlüssigen Aufnahme derart eingefügt sein, dass er durch wirkende Seilzugkräfte in die Aufnahme gedrängt wird. Die Seilzugführungsfunktion ist durch kanalartig erhaben ausgeprägten Wände (U-Schenkel) zusätzlich verbesserbar. Der derart gebildete Seilzugführungskanal kann ausgehend von einem Seileintritt trichterförmig verengt ausgebildet sein. Die U-Schenkel vom Seilzugführungskanal können weiterhin mit Nocken ausgestattet sein, die das Seil derart zumindest teilweise übergreifen, so dass ein unerwünschtes Austreten eines schlaffen Seils, insbesondere in einem gelösten Zustand der Bremse, vermieden wird. Die Nocken können in einem axialen Abstand zueinander jeweils am gegenüberliegenden U-Schenkel vorgesehen sein. Der Seilzugführungskörper kann ein- oder mehrstückig ausgebildet sein. Durch die mehrstückige Variante wird es beispielsweise ermöglicht ein Haltebauteil mit einem Seilzugführungskanalbauteil zu versehen, welches günstige Reibeigenschaften aufweist. Der ein- oder mehrstückige Seilzugführungskörper ist schließlich mit Befestigungsmitteln an der Ankerplatte befestigt. Zu diesem Zweck ist an dem Seilzugführungskörper bevorzugt wenigstens ein Rastmittel vorgesehen, das wenigstens einen elastischen Federschenkel umfasst, welcher elastisch an einer Ausnehmung oder an einer Nocke der Ankerplatte angreift. Der Seilzugführungskörper kann inkorporierte Festschmierstoffbestandteile aufweisen und bevorzugt aus einem warmfesten Kunststoffwerkstoff bestehen. Quer zur Seilachse kann ein oder mehrere Haltearme vorgesehen sein, die unlösbar sowie unmittelbar oder mittelbar gemeinsam mit der Abstützvorrichtung mit der Ankerplatte verschweißt oder vernietet sind.

In der Zeichnung zeigt, teilweise schematisch und teilweise in verschiedenem Maßstab, Schnitt, Ansicht oder Perspektive:
Fig. 1 zur Erläuterung ein vorveröffentlichtes Trommelbremsmodul mit Ankerplatte und Seilzugaktuator jedoch ohne Bremstrommel im Schnitt gemäß WO 2012/104395 A2,
Fig. 2 perspektivische Ansicht eines erfindungsgemäßen Trommelbremsmoduls zum Einsatz auf einer rechten Fahrzeugseite ohne Bremstrommel mit Blickrichtung ausgehend von einer Rückseite der Ankerplatte,
Fig. 3 Ansicht vergleichbar der Fig. 2 mit Blickrichtung ausgehend von einer Vorderseite der Ankerplatte,
Fig. 4 und 6 zwei ausgewählte Schnitte durch ein erfindungsgemäßes Trommelbremsmodul,
Fig. 5 Seitenansicht des Trommelbremsmoduls gemäß Fig. 4,

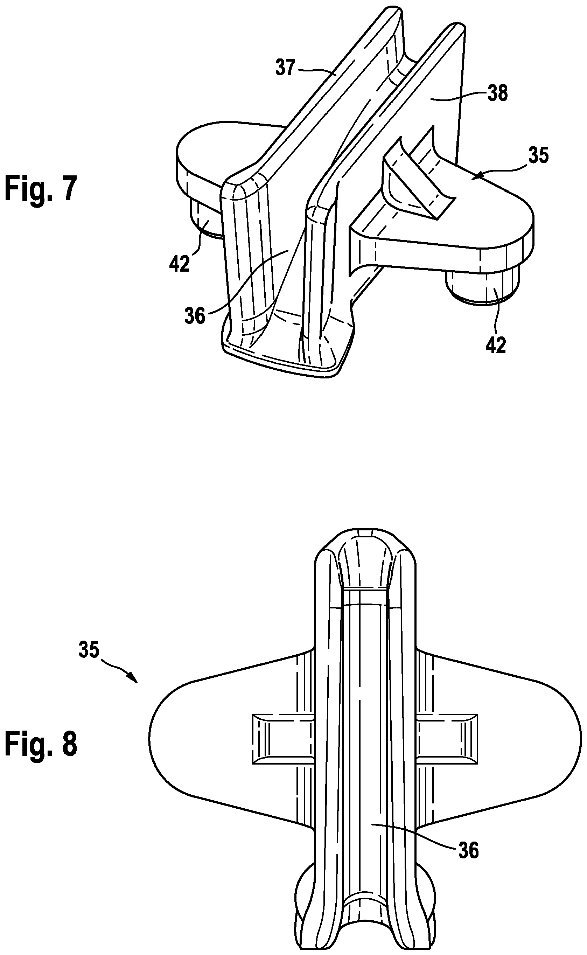

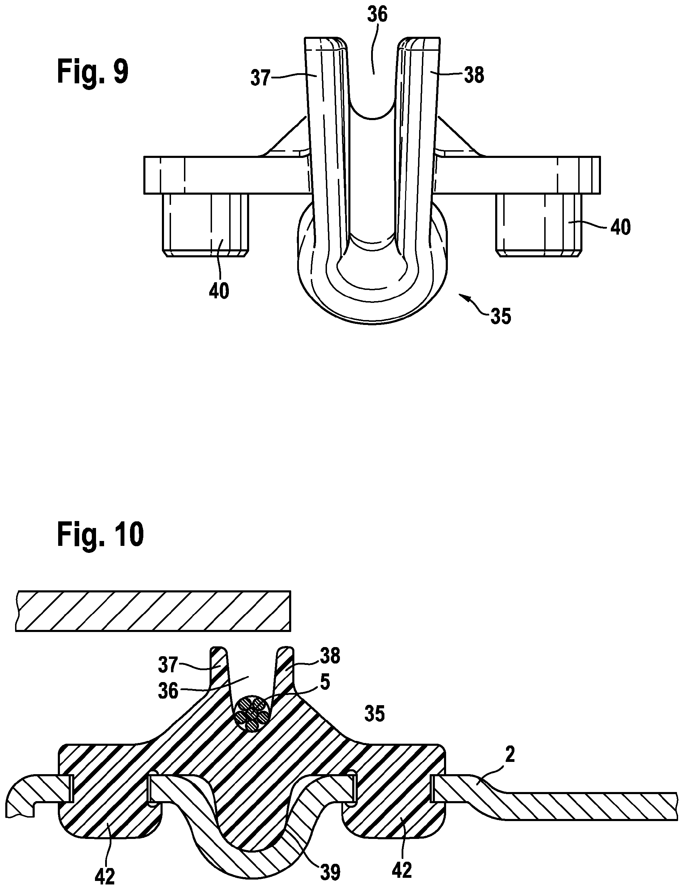

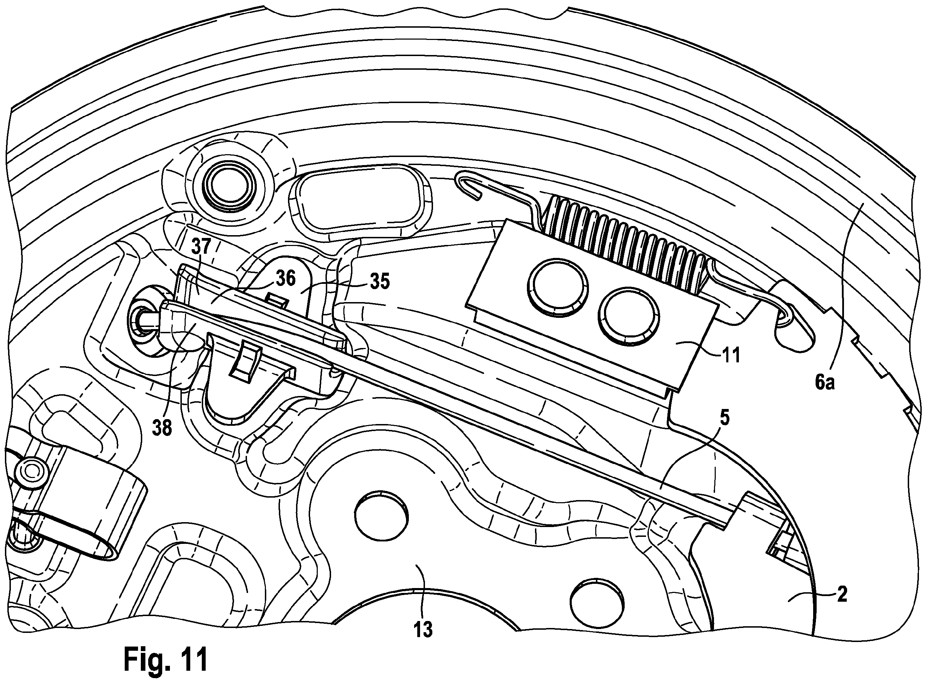

Fig. 7 - 11 eine erste Gestaltungsvariante eines bevorzugten Seilzugführungskörpers in unterschiedlichen Ansichten,

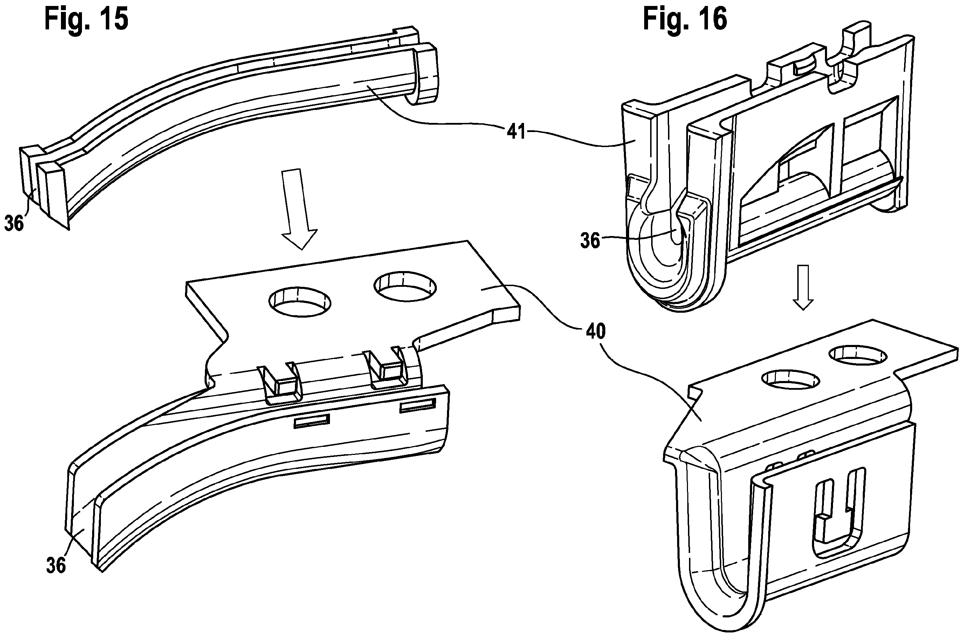

Fig. 12-15 eine zweite Gestaltungsvariante von einem Seilzugführungskörper,
Fig. 16 eine dritte Variante von einem Seilzugführungskörper, und
Fig. 17 eine besonders vorteilhafte Befestigungsvariante für die Seilzugführungskörper.

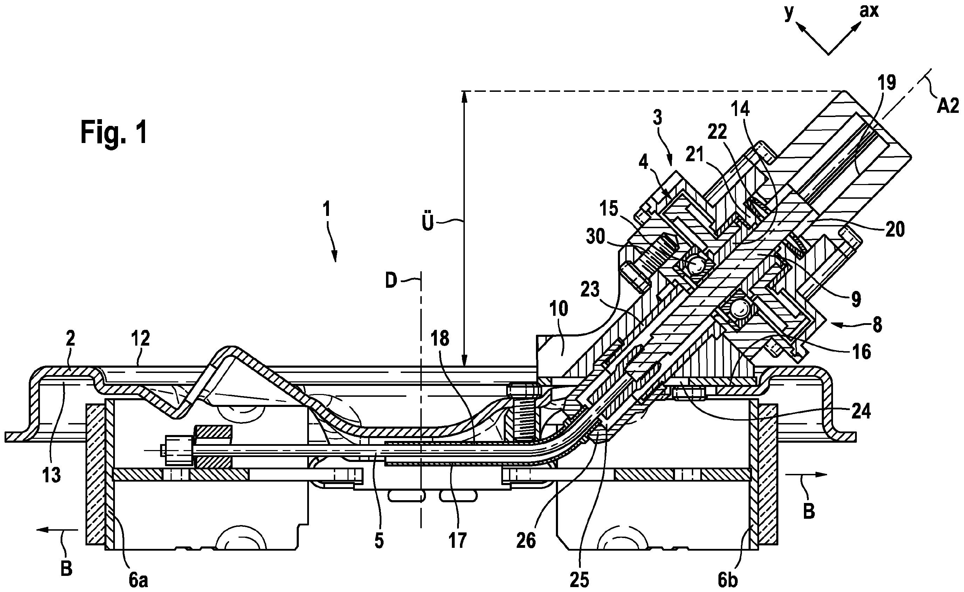

Ein bekanntes elektromotorisch betätigbares Trommelbremsmodul 1 zur Anordnung an Achsbauteilen eines Kraftfahrzeugs umfasst gemäß Fig. 1 eine Ankerplatte 2 mit daran gelagerten Bremsbacken 6a,b, die innerhalb einer nicht gezeichneten Bremstrommel vorgesehen sind. Auf einer gegenüber liegenden Seite der Ankerplatte 2 ist ein elektromotorisch angetriebener Seilzugaktuator 3 befestigt, der über ein Getriebe 4 und einen nachgeschalteten Seilzug 5 derart an einer oder mehreren der Bremsbacken 6a,b angreift, dass diese Bremsbacke(n) 6a,b eine Betätigungsbewegung B in Richtung auf die Bremstrommel ausführen können, um eine Betriebs- und/oder Feststellbremsfunktion auszuführen. Zwischen den Bremsbacken 6a,b kann eine Abstützvorrichtung 11 vorgesehen sein.
Das Getriebe 4 umfasst ein Getriebegehäuse 8, das den Motor 7 aufnimmt oder den Motor 7 zumindest trägt. Der Motor 7 konsumiert Gleichspannung ist mechanisch oder elektronisch kommutiert, und von einem preiswert verfügbaren Standardtyp.

Die Fig. 1 verdeutlicht allenfalls mittelbar, dass eine Achse A1 von dem Motor 7 im Abstand x sowie parallel zu einer Achse A2 einer Spindelanordnung 9 arrangiert ist. Der Adapter 10 ist zwischen Seilzugaktuator 3 und Ankerplatte 2 eingefügt.

Der Antriebs- und Getriebestrang verfügt über ein mehrstufiges, insbesondere 2-stufiges Zahnrad- und/oder Riemen- und/oder Schneckengetriebe und/oder Planetengetriebe (Mischkombinationen vorgenannter Typen sind möglich und erwünscht) als Momentenwandler vom Untersetzungstyp. Dabei ermöglicht ein vorzugsweise zweistufiges Rädergetriebe ein Untersetzungsverhältnis in einem Bereich zwischen etwa 7:1 bis 25:1. Wenn das nachgeschaltete Hebelgetriebe im Bereich der Bremsbacken 6a,b eine Untersetzung von etwa 5:1 ermöglicht, wird ein Untersetzungsverhältnis von etwa 125:1 erzielt. Hinzu tritt eine zusätzliche Untersetzungswirkung von dem Rot-Trans-Wandler, was eine Gesamtuntersetzungswirkung über den gesamten Antriebsstrang in einer Größenordnung von mindestens etwa 250:1 ermöglicht. Durch diesen Getriebestrang sind die Kosten- und Leistungsanforderungen an den Motor 7 zusätzlich deutlich abgesenkt.

Die Seilzugaktuatorkonstruktion ist im Einzelnen aus Fig. 1 ersichtlich. Der Seilzugaktuator 3 ist dabei als gesondert handhabbare Baueinheit auf einer Seite 12 der Ankerplatte 2 vorgesehen. Es ist möglich, den Rot-Trans-Wandler als Spindelanordnung 9 in das Getriebegehäuse 8 zu integrieren und in dem Getriebegehäuse 8 verdrehsicher, leichtgängig sowie spielfrei zu führen. Eine Abwandlung der Gestaltung besteht darin, dass der Rot-Trans-Wandler außerhalb vom Getriebegehäuse 8 innerhalb der Bremstrommel vorgesehen ist, und eine Spindelanordnung 9 oder einen schwenkbaren Hebel beinhaltet, der an der Ankerplatte 2 gelagert ist. Die Befestigung ist vorzugsweise lösbar angeflanscht vorgesehen.

Wie aus Fig. 1 teilweise hervorgeht, ist das Getriebegehäuse 8 mehrstückig gebaut. Das Getriebegehäuse 8 nimmt eine Mehrzahl von Getriebebauelementen auf, die primär zur Drehmomentwandlung (geringes Eingangsdrehmoment, hohes Ausgangsdrehmoment) dienen, und auch eine stromlose Feststellbremsfunktion mittels Selbsthemmung ermöglichen können. Achsen A1, A2 von Motor- und Getriebewellen sind parallel, in dem Abstand X versetzt, zueinander vorgesehen. Zumindest bestimmte Getriebebauelemente können zumindest teilweise kostengünstigen Kunststoffwerkstoff aufweisen. Bevorzugt ist stromlose Selbsthemmung in dem Rot-Trans-Wandler (Spindelanordnung 9) vorgesehen, so dass der Rest vom Getriebestrang prinzipiell von den Zuspannkräften weitestgehend entlastet ist.

Gemäß Fig. 1 nimmt das Getriebegehäuse 8 zumindest teilweise zusätzlich eine Rot-Trans-Wandlerbaugruppe mit der Spindelanordnung 9 zur Wandlung der rotatorischen Antriebsdrehbewegung in eine translatorische Abtriebsbewegung auf. Folglich ist der Wandler zur raumsparenden Integration in die bekannten Trommelbremsanordnungen kostengünstig und platzsparend (verdichtet) in einer Schnittstelle zwischen Seilzugaktuator 3 und Ankerplatte 2 eingefügt und dennoch im Getriebegehäuse geführt, so dass für eine Umrüstung auf die elektromechanische Seilzugaktuatorik irgendwelche Änderungen an der Trommelbremsmechanik, insbesondere an dem Hebelgetriebe oder an der Ankerplatte 2, gar nicht notwendig sind.

Für diejenigen Applikationen mit einer besonders effektiven, reibungsreduzierten, elektromechanischen Bremsfunktion befinden sich zwischen einer prinzipiell metallisch ausgebildeten Antriebsmutter 14 und einer prinzipiell metallisch ausgebildeten Spindelanordnung 9 mehrere Wälzkörper. Eine Parkbremsfunktion wird bei den "stromlos gelösten" Varianten durch eine gesonderte Feststell-,Verriegelungs- oder Blockiervorrichtung ermöglicht. Eine besonders vorteilhafte Vorrichtung ist beispielsweise aus der DE 19826785 A1 bekannt, deren Offenbarungsgehalt in Hinblick auf die Prinzipien dieser Festellvorrichtung in vollem Umfang hier mit einbezogen wird.

Der Kraftfluss der Bremsbetätigungskraft ist folgendermaßen. Ausgehend von Bremsbacke 6a,b und Seilzug 5 gelangt die Zugkraft über Spindelanordnung 9 in die Antriebsmutter 14. Für eine direkte, starre Bremskraftabstützung an einer planen Auflagefläche 16 kann eine metallische Distanzbuchse dienen. Diese stützt einen Außenring von dem Lager 15 auf der Ankerplatte 2 ab. Die Distanzbuchse ist bevorzugt als Einlegeteil in das Getriebegehäuse 8 aus Kunststoffwerkstoff eingeformt. Das Lager 15 ist mit Vorteil als reibungsarmes Wälzlager (Schräg-, Schulter-, Axial- oder Rillenkugellager) ausgelegt. Das beschriebene Lager 15 ermöglicht auch eine radial gerichtete Lagerung für die Antriebsmutter 14. In Abwandlung der Gestaltung, kann für eine besonders präzise, kippresistente Abstützung der Antriebsmutter 14 jeweils ein antriebsseitiges und zusätzlich ein abtriebsseitiges Lager vorgesehen sein, ohne die Erfindung zu verlassen.

Die Spindelanordnung 9 steht mit der Antriebsmutter 14 in Eingriff, und ist in dem Getriebegehäuse 8 verdrehsicher sowie axial verschiebbar geführt platziert. Zu diesem Zweck weist das Getriebegehäuse 8 eine prismatische oder zylindrische Führung 19 mit wenigstens einem oder mehreren angepassten Kulissenelementen auf, welche als formschlüssig wirksames Mittel zur Führungs- und Verdrehsicherungsfunktion beitragen. Um eine günstige elektrische Abschaltung vom Seilzugaktuator 3 zu ermöglichen, ist die Spindelanordnung 9 mit einem Anschlag 20 versehen, der zur Anlage an einem gehäuseseitigen Widerlager 21 dient. Weiterhin ist zwischen Widerlager 21 und Anschlag 20 wenigstens ein Elastoelement 22 vorgesehen. Das Elastoelement 22 ist bevorzugt als Tellerfederanordnung ausgebildet, die eine steife Federkennlinie bei geringem Platzbedarf ermöglicht. Dies ermöglicht in Verbindung mit Messung und Beobachtung vom Strombedarf des Motors 7 eine günstige und frühzeitige automatische elektrische Abschaltung durch die Steuereinheit. Um konstant eine reproduzierbare Abschaltung zu ermöglichen, erfordert das System möglichst konstante Betriebsbedingungen (Seilführungsreibung).

Die verdichtete Seilzugaktuatorbauweise beinhaltet, dass die Spindelanordnung 9 zumindest teilweise in einem Stutzen 23 vom Getriebegehäuse 8 verschiebbar geführt aufgenommen ist. Der Stutzen 23 ist in Relation zu einer Durchgangsöffnung 24 der Ankerplatte 2 zentriert angeordnet. Vorzugsweise durchgreift der Stutzen 23 die Durchgangsöffnung 24 derart, dass zumindest ein Teil von der Spindelanordnung 9 in das Innere von der Bremstrommel verschoben werden kann. Dies dient auch einer automatischen Zentrierung vom Seilzug 5.

Dies vorausgeschickt wird nachstehend auf die Besonderheiten von Trommelbremsmodulen mit den erfindungsgemäßen Adaptern 10 eingegangen. Sinn und Zweck dieser neuartigen Adaptierung ist primär eine Gleichteilestrategie in Bezug auf die Bauteile des Trommelbremsmoduls wie insbesondere Ankerplatte 2 und Getriebegehäuse 8 für sämtliche Fahrzeugapplikationen. Mit anderen Worten wird es erfindungsgemäß ermöglicht, dass sämtliche Seilzugaktuatoren 3 zur Anordnung auf einer rechten Fahrzeugbremsseite sowie zur Anordnung auf einer linken Fahrzeugbremsseite jeweils konstruktiv gleich ausgebildet sind, und wobei im Wesentlichen jeweils nur der Adapter 10 - in Anpassung an die jeweils angebotene Schnittstelle, den Einbauraum, die Ankerplatte 2 sowie die Fahrzeugseite - fahrzeugabhängig variiert ausgebildet ist. Im Ergebnis wird erfindungsgemäß erstmals eine einfache Anpassung und Adaption an unterschiedliche Raum- und Einbauverhältnisse in einem Kraftfahrzeug ermöglicht.

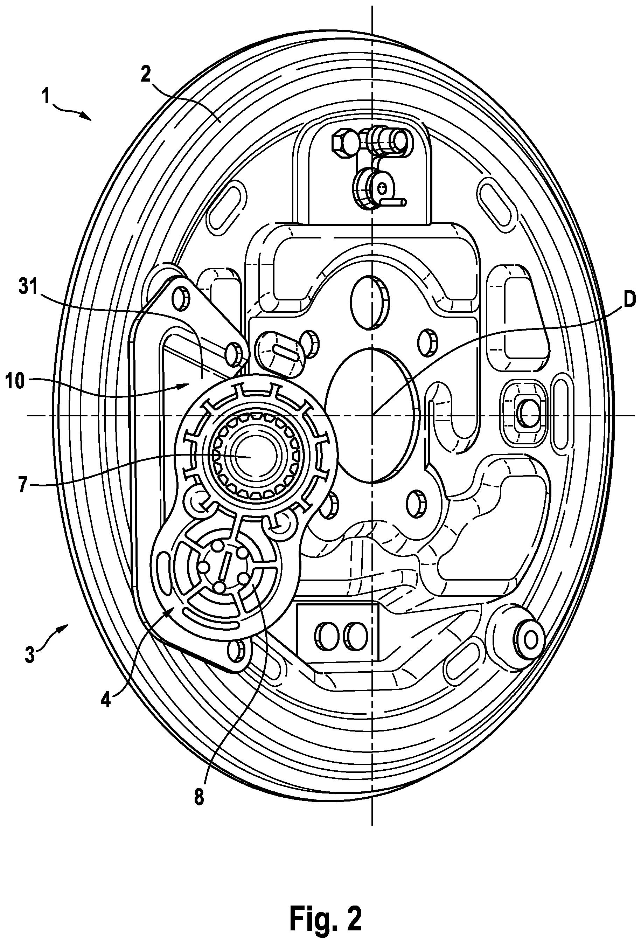

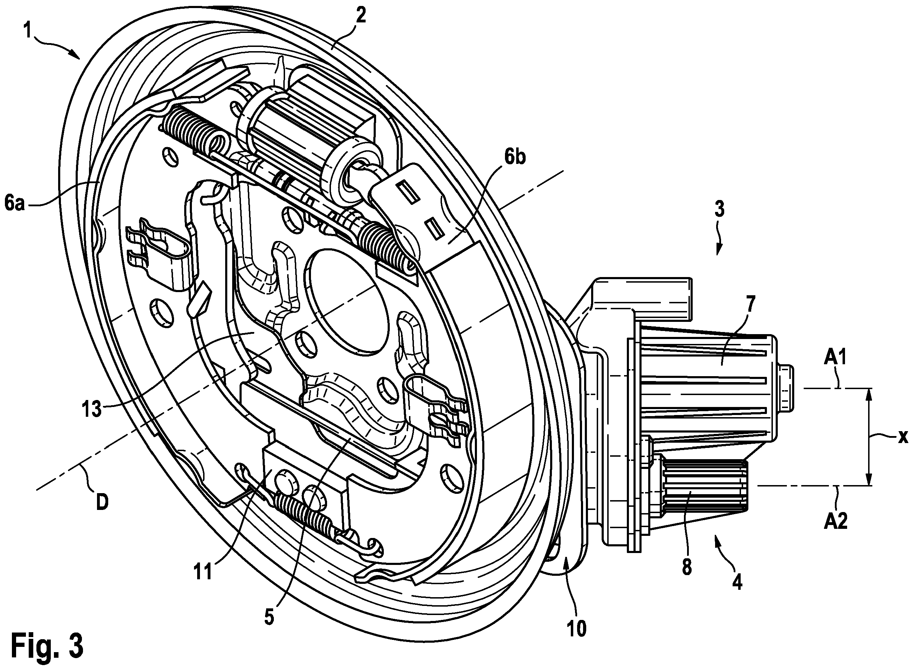

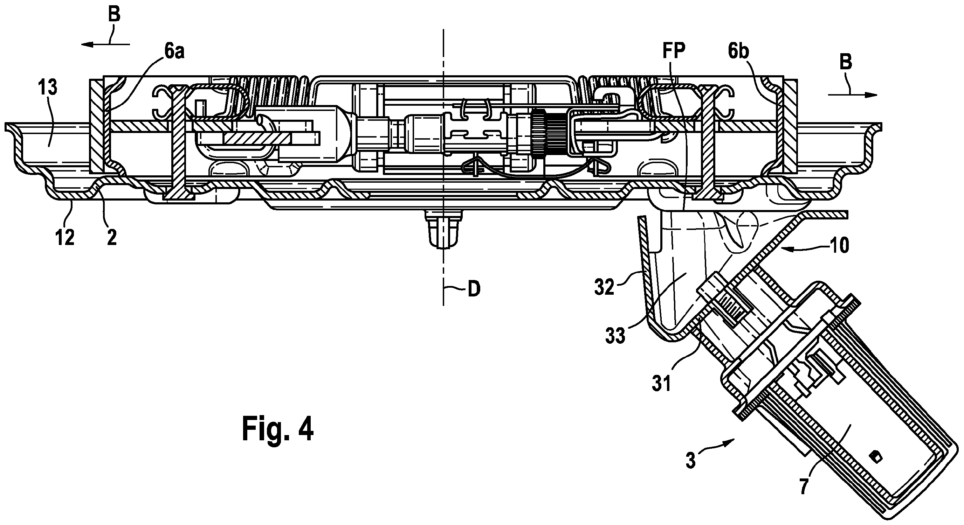

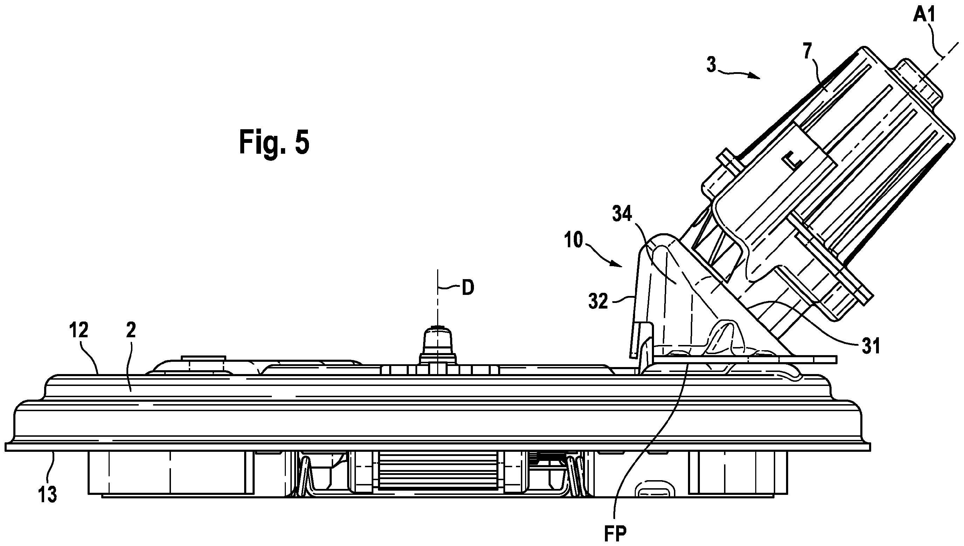

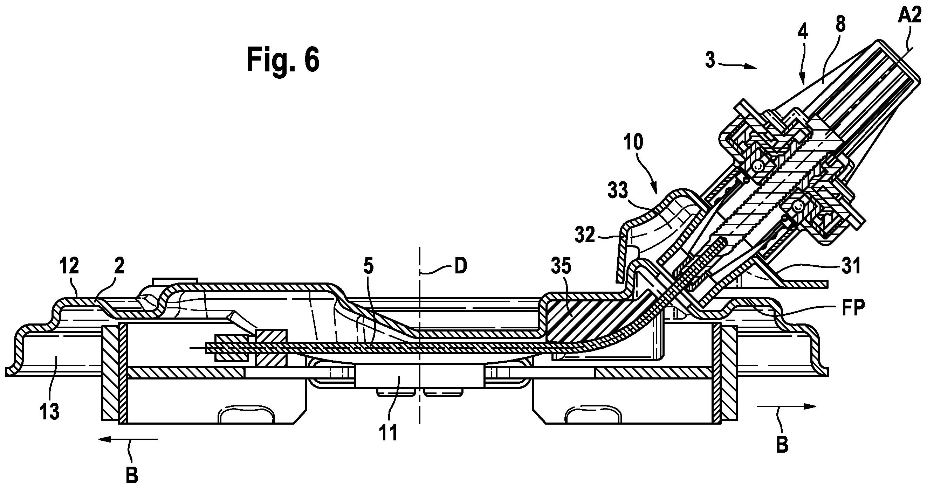

Erfindungsgemäß ist vorgesehen, dass der Adapter 10 als einstückiger und dünnwandiger Rahmen vorliegt, der einerseits wenigstens einen ebenen dünnen Befestigungsflansch 31 zur Aufnahme von dem Seilzugaktuator 3 aufweist, und wobei der Rahmen andererseits an der Ankerplatte 2 fixiert ist. Dadurch ist eine besonders leichte und stabile fachwerkartige Struktur geschaffen, die mit verhältnismäßig überschaubarem Aufwand sowie Werkstoffeinsatz kostengünstig adaptierbar ist. Dabei ist der Rahmen mit Vorteil einstückig sowie mit mehreren im Winkel sowie schräg zueinander angeordneten dünnen Streben 32, 33, 34 gebildet, die zwischen Befestigungsflansch 31 und Ankerplatte 2 gespannt sind. Die Streben 32,33,34 tragen folglich den Befestigungsflansch 31. Die Länge und Winkellage der Streben 32,33,34 ist derartig frei variierbar, dass der Befestigungsflansch 31 - und folglich die Achsen A1, A2 vom Seilzugaktuator 3 - eine beliebige Winkellage in Relation zur Ankerplatte 2 einnehmen können. Die dünnen Streben 32,33,34 können als biegesteife Profile wie insbesondere Rohre, Profilbalken oder eben Blech ausgebildet sein. Demzufolge ist es möglich, ein selbsttragendes Chassis mit Hilfe von dünnen Wandscheiben auszubilden, die über biegesteife Knoten miteinander und/oder mit dem Befestigungsflansch verbunden sind, wie es aus den Figuren 2-6 hervorgeht. Zur Gewichtseinsparung oder für andere Aufgaben kann eine oder mehrere der Wandscheiben mit einer oder mit mehreren Aussparungen versehen sein. Zur Erhöhung der Effektivität sind die Knoten mit Rippen zusätzlich ausgesteift.
Die Streben 32,33,34 können windschief zur Ankerplatte 2 angeordnet sein. Ein Fußpunkt FP von mindestens drei Streben 32,33,34 ist zur Bildung einer statisch bestimmte Dreipunktauflage im Bereich von Abstützarealen derart auf der Außenseite 12 der Ankerplatte 2 angeordnet, so dass die Bremsbetätigungslasten in die fahrzeugfeste Ankerplatte 2 abgeleitet werden. Das gebildete Arrangement aus einem Befestigungsflansch 31 mit mehreren Stützen 32,33,34 oder ebgenen Wandscheiben kann gemeinsam die Form von einen regelmäßig oder unregelmäßig geformten Polyeder ausbilden, der insbesondere tetraedrisch oder pyramidal vorliegt. Der Aufbau von dem beschriebenen Adapter 10 erfolgt bevorzugt einstückig aus geschweißtem Stahldraht oder Stahlblech. Blech kann vorteilhaft unter Verwendung spanloser Blechumformtechnologie wie insbesondere Scherschneiden, Biegen und Stanzen dreidimensional umgeformt werden. In Verbindung mit Biege- Tiefzieh- und/oder Kaltumformung wird der zusätzliche Vorteil erzielt, dass in den Umformzonen automatisch eine Kaltverfestigung in Ausbildung der Knoten erhalten wird. Eine praxisgerechte andere Variation besteht darin, dass der Adapter 10 als einstückiges, warmfestes Kunststoffbauteil ausgebildet ist. Weil eine Seilzugachse bei Austritt aus dem Seilzugaktuator 3 mit der Achse A2 koaxial ist und jeweils orthogonal zu dem Befestigungsflansch 31 verläuft, und der Befestigungsflansch 31 wiederum beliebig windschief in Relation zu der Ankerplatte 2 arrangiert ist, verfügt jede Ankerplatte 2 über wenigstens einen gesonderten reibungsarmen Seilzugführungskörper 35 mit einer gekrümmten Seilzugaufnahme 36 umfassend eine Auflage die derart angeordnet ist, dass der Seilzug 5 in Relation zu dem Befestigungsflansch 31 einerseits, und in Relation zu der Betätigungsrichtung B der betätigten Bremsschuhen 6a, 6b andererseits, funktionssicher sowie verlustfrei - reibungsarm fluchtend zugeführt ist.

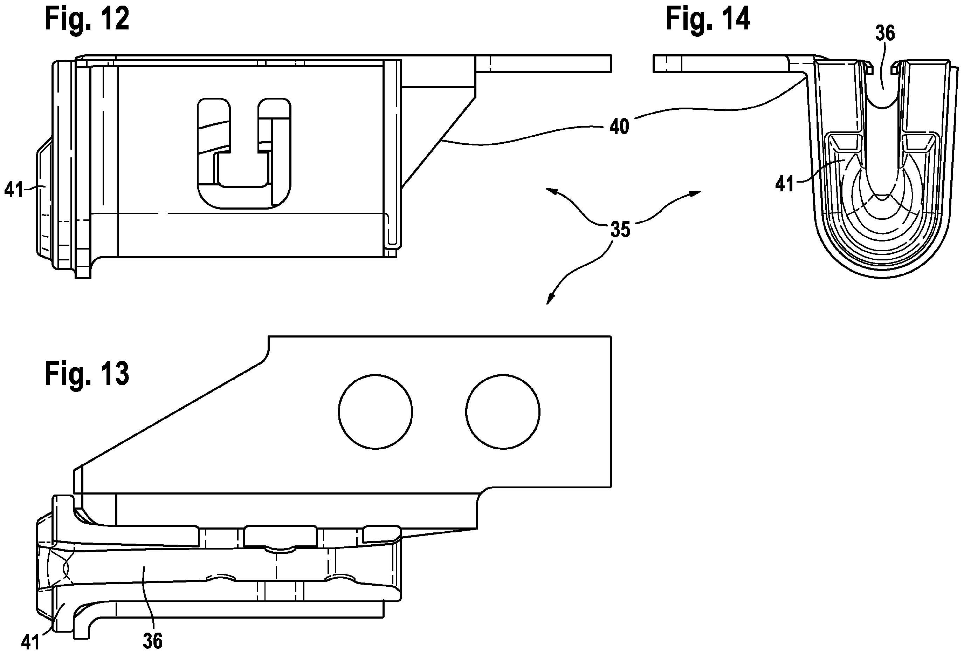

Dazu weist die Seilzugaufnahme 36 einen, zumindest streckenweise U-förmig ausgeprägten Seilzugführungsquerschnitt auf, welcher zumindest zwei einander gegenüberliegend angeordnete sowie erhaben ausgebildete Wände (U-Schenkel) Wand aufweist. Der gesonderte also einfach austauschbare Seilzugführungskörper 35 ist ausgehend von der Innenseite 13 der Ankerplatte 2 in eine Aufnahme 39 formschlüssig eingefügt und wird von einem Abschnitt des Seilzuges 5 übergriffen. Aus der Seilzugumlenkung resultieren parasitäre Anpresskräfte, welche den Seilzugführungskörper 35 in dessen Aufnahme 39 fixieren. Weiterhin ist im Seilzugführungskörper 35 mit Vorteil ein verengter Seilzugführungskanal ausgebildet, wobei der Seilzug 5 zwecks Lagesicherung zumindest teilweise durch Nocken gemäß Fig. 13,14 übergriffen oder trichterförmig verengt umgriffen ist. Zur Optimierung der Eigenschaften ist es bei allen Ausgestaltungen vorteilhaft wenn der Seilzugführungskörper 35 mehrstückig aus einem Haltebauteil 40 und aus einem Seilzugführungskanalbauteil 41 zusammengefügt ist. Dadurch wird es insbesondere ermöglicht, das Seilzugführungskanalbauteil 41 gezielt aus einem selbstschmierenden Kunststoffwerkstoff auszubilden, welcher inkorporierte Festschmierstoffpartikel aufweist. Durch diese Bauweise wird über die Lebensdauer ein konstant-günstiges sowie reproduzierbares Reibverhalten gewährleistet, um durch diesen Beitrag in der verbesserten Seilzugführung eine dauerhaft reproduzierbare Steuerung vom Seilzugaktuator 3 zu unterstützen. Das Haltebauteil 40 kann dagegen aus einem Stahlblechwerkstoff ausgebildet sein.

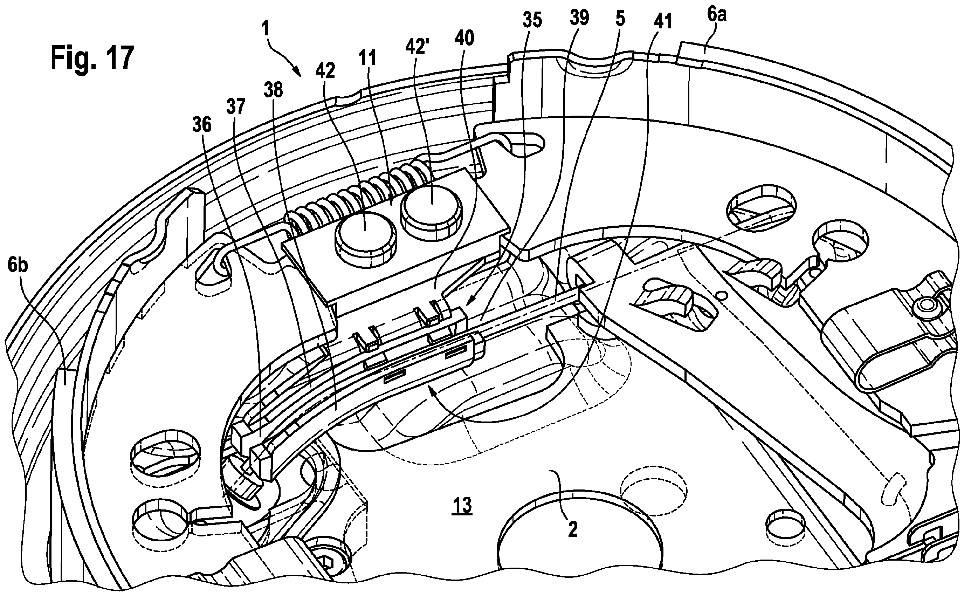

Die Fig. 17 verdeutlicht eine mittelbare, gemeinsame Befestigung von Abstützvorrichtung 11 und mehrteilig ausgebildetem Seilzugführungskörper 35 an der Innenseite 13 der Ankerplatte 2. Befestigungsmittel 42 fixieren die gebildete Baueinheit.

### Bezugszeichenliste:

- 1: Trommelbremsmodul
- 2: Ankerplatte
- 3: Seilzugaktuator
- 4: Getriebe
- 5: Seilzug
- 6: Bremsbacken
- 7: Motor
- 8: Getriebegehäuse
- 9: Spindelanordnung
- 10: Adapter
- 11: Abstützvorrichtung
- 12: Außenseite
- 13: Innenseite
- 14: Antriebsmutter
- 15: Lager
- 16: Auflagefläche
- 17: Führung
- 18: Hülle
- 19: Führung
- 20: Anschlag
- 21: Widerlager
- 22: Elastoelement
- 23: Stutzen
- 24: Durchgangsöffnung
- 25: Austrittsöffnung
- 26: Dichtungselement

- 30: Befestigungsmittel
- 31: Befestigungsflansch
- 32: Strebe/Wand
- 33: Strebe/Wand
- 34: Strebe/Wand
- 35: Seilzugführungskörper
- 36: Seilzugaufnahme
- 37: Wand
- 38: Wand
- 39: Aufnahme
- 40: Haltebauteil
- 41: Seilführungskanalbauteil
- 42: Befestigungsmittel

- A1: Achse
- A2: Achse
- B: Betätigungsrichtung
- D: Drehachse
- ax: axial
- r: radial
- Ü: Überstand
- X: Abstand
- FP: Fußpunkt/Aufstandspunkt

## Patentansprüche

1. Elektromotorisch betätigtes Trommelbremsmodul (1) mit Seilzugaktuatoranordnung für Kraftfahrzeuge, umfassend einen elektromechanischen Seilzugaktuator (3), der auf einer Außenseite (12) der Ankerplatte (2) angeordnet ist, zum Antrieb von einem Rot-Trans-Wandler zur Wandlung einer rotatorischen Antriebsdrehbewegung in eine translatorische Betätigungsbewegung (B) von Bremsbacken (6a,b), die auf einer dem Seilzugaktuator (3) abgewandten Innenseite (13) der Ankerplatte (2) im Inneren einer Bremstrommel angeordnet sind, so dass diese eine Betätigungsbewegung in Richtung Bremstrommel ausführen können, und wobei zwischen Seilzugaktuator (3) und Ankerplatte (2) ein Adapter angeordnet ist, welcher als einstückiger und dünnwandiger Rahmen vorgesehen ist, der einerseits wenigstens einen ebenen Befestigungsflansch (31) zur Aufnahme von dem Seilzugaktuator (3) aufweist, und wobei der Rahmen andererseits an der Ankerplatte (2) fixiert ist, **dadurch gekennzeichnet, dass** der Rahmen einstückig sowie mit mehreren im Winkel sowie schräg zueinander angeordneten dünnen Streben (32,33,34) vorgesehen ist, die sich zwischen Befestigungsflansch (31) und Ankerplatte (2) erstrecken.

2. Elektromotorisch betätigtes Trommelbremsmodul (1) für Kraftfahrzeuge nach Anspruch 1, **dadurch gekennzeichnet, dass** die dünnen Streben (32,33,34) als ebene und dünne Wandscheiben ausgebildet sind, die über biegesteife Knoten miteinander und/oder mit dem Befestigungsflansch (31) verbunden sind.

3. Elektromotorisch betätigtes Trommelbremsmodul (1) für Kraftfahrzeuge nach Anspruch 2, **dadurch gekennzeichnet, dass** eine oder mehrere Wandscheiben eine oder mehrere Aussparungen aufweisen.

4. Elektromotorisch betätigtes Trommelbremsmodul (1) für Kraftfahrzeuge, nach Anspruch 2, **dadurch gekennzeichnet, dass** die Knoten mit Rippen ausgesteift sind.

5. Elektromotorisch betätigtes Trommelbremsmodul (1) für Kraftfahrzeuge nach Anspruch 1, **dadurch gekennzeichnet, dass** windschief zur Ankerplatte (2) angeordneten Streben (32,33,34) des Adapters (10) im Wesentlichen parallel zu einer Außenseite (12) der Ankerplatte (2) mit mindestens drei Abstützarealen oder Fußpunkten FP auf der Ankerplatte (2) aufsitzen.

6. Elektromotorisch betätigtes Trommelbremsmodul (1) für Kraftfahrzeuge, nach Anspruch 2, **dadurch gekennzeichnet, dass** Befestigungsflansch (31) und Wandscheiben einen regelmäßig oder unregelmäßig geformten Polyeder ausbilden, der insbesondere tetraedrisch oder pyramidal vorgesehen ist.

7. Elektromotorisch betätigtes Trommelbremsmodul (1) für Kraftfahrzeuge nach Anspruch 1, **dadurch gekennzeichnet, dass** der Adapter (10) als Blechumformteil oder als Kunststoffteil ausgebildet ist.

8. Elektromotorisch betätigtes Trommelbremsmodul (1) für Kraftfahrzeuge nach einem oder mehreren der vorhergehenden Ansprüche, **dadurch gekennzeichnet, dass** dem Adapter (10) mit Befestigungsflansch (31) ein gesonderter Seilzugführungskörper (35) mit einer gekrümmten Seilzugaufnahme (36) zugeordnet ist, die einen zumindest teilweise U-förmig ausgebildeten Führungsquerschnitt aufweist, welcher zumindest zwei einander gegenüberliegend angeordnete und erhaben ausgebildete Wände (U-Schenkel) (37,38) aufweist.

9. Elektromotorisch betätigtes Trommelbremsmodul (1) für Kraftfahrzeuge nach Anspruch 8, **dadurch gekennzeichnet, dass** der Seilzugführungskörper (35) ausgehend von einer Innenseite (13) der Trägerplatte (2) in eine Aufnahme (39) formschlüssig eingefügt sowie von einem Abschnitt des Seilzugs (5) übergriffen ist.

10. Elektromotorisch betätigtes Trommelbremsmodul (1) für Kraftfahrzeuge nach Anspruch 8 oder 9, **dadurch gekennzeichnet, dass** der Seilzugführungskörper (35) einen verengten Seilzugführungskanal ausbildet, indem der Seilzug (5) zumindest teilweise übergriffen oder trichterförmig verengt umgriffen ist.

11. Elektromotorisch betätigtes Trommelbremsmodul (1) für Kraftfahrzeuge nach Anspruch 8, **dadurch gekennzeichnet, dass** der Seilzugführungskörper (35) mehrstückig aus einem Haltebauteil (40) und aus einem Seilzugführungskanalbauteil (41) aufgebaut ist.

12. Elektromotorisch betätigtes Trommelbremsmodul (1) für Kraftfahrzeuge nach wenigstens einem der Ansprüche 8 bis 11, **dadurch gekennzeichnet, dass** der Seilzugführungskörper (35) zumindest teilweise aus einem Kunststoffwerkstoff enthaltend wenigstens eine inkorporierte Festschmierstoffkomponente aufgebaut ist, und wobei der Seilzugführungskörper (35) zusammen mit der Abstützvorrichtung (11) an der Ankerplatte (2) befestigt ist.

## Claims

1. Electromotively actuated drum brake module (1) with cable pull actuator arrangement for motor vehicles, comprising an electromechanical cable pull actuator (3) which is arranged on an outer side (12) of the anchor plate (2) and which serves for driving a rotation-translation converter for converting a rotational drive input rotary movement into a translational actuation movement (B) of brake pads (6a,b), which brake pads are arranged on an inner side (13), averted from the cable pull actuator (3), of the anchor plate (2) in the interior of a brake drum, such that said brake pads can perform an actuation movement in the direction of the brake drum, and wherein an adapter is arranged between cable pull actuator (3) and anchor plate (2), which adapter is provided in the form of a unipartite and thin-walled frame which, on one side, has at least one planar fastening flange (31) for accommodating the cable pull actuator (31), and wherein the frame is fixed at the other side to the anchor plate (2), **characterized in that** the frame is provided in unipartite form with multiple thin struts (32, 33, 34) which are arranged at an angle and obliquely with respect to one another and which extend between fastening flange (31) and anchor plate (2) .

2. Electromotively actuated drum brake module (1) for motor vehicles according to Claim 1, **characterized in that** the thin struts (32, 33, 34) are in the form of planar and thin wall panels which are connected to one another and/or to the fastening flange (31) by way of flexurally stiff joints.

3. Electromotively actuated drum brake module (1) for motor vehicles according to Claim 2, **characterized in that** one or more wall panels have one or more cutouts.

4. Electromotively actuated drum brake module (1) for motor vehicles according to Claim 2, **characterized in that** the junctions are stiffened by way of ribs.

5. Electromotively actuated drum brake module (1) for motor vehicles according to Claim 1, **characterized in that** struts (32, 33, 34), which are arranged in skewed fashion relative to the anchor plate (2), of the adapter (10) are seated on the anchor plate (2), substantially parallel to an outer side (12) of the anchor plate (2), by way of at least three support areas or foot points FP.

6. Electromotively actuated drum brake module (1) for motor vehicles according to Claim 2, **characterized in that** fastening flange (31) and wall panels201593 form a regular or irregular polyhedron which is in particular of tetrahedral or pyramidal form.

7. Electromotively actuated drum brake module (1) for motor vehicles according to Claim 1, **characterized in that** the adapter (10) is in the form of a sheet-metal molded part or plastics part.

8. Electromotively actuated drum brake module (1) for motor vehicles according to one or more of the preceding claims, **characterized in that** the adapter (10) with fastening flange (31) is assigned a separate cable pull guide body (35) with a curved cable pull receptacle (36) which has an at least partially U-shaped guide cross section which has at least two mutually oppositely arranged walls (U limbs) (37, 38) of raised form.

9. Electromotively actuated drum brake module (1) for motor vehicles according to Claim 8, **characterized in that** the cable pull guide body (35) is inserted in positively locking fashion, proceeding from an inner side (13) of the carrier plate (2), into a receptacle (39) and is engaged over by a section of the cable pull (5).

10. Electromotively actuated drum brake module (1) for motor vehicles according to Claim 8 or 9, **characterized in that** the cable pull guide body (35) forms a narrowed cable pull guide channel in which the cable pull (5) is at least partially engaged over or engaged around in funnel-shaped, narrowed fashion.

11. Electromotively actuated drum brake module (1) for motor vehicles according to Claim 8, **characterized in that** the cable pull guide body (35) is of a multi-part construction composed of a holding component (40) and of a cable pull guide channel component (41).

12. Electromotively actuated drum brake module (1) for motor vehicles according to at least one of Claims 8 to 11, **characterized in that** the cable pull guide body (35) is constructed at least partially from a plastics material comprising at least one incorporated solid lubricant component, and wherein the cable pull guide body (35) is fastened, together with the support device (11), to the anchor plate (2).

## Revendications

1. Module (1) de frein à tambour actionné par moteur électrique, présentant un ensemble d'actionneur à câble de traction, pour véhicules automobiles, comprenant
un actionneur électromécanique (3) de câble de traction disposé sur le côté extérieur (12) de la plaque d'ancrage (2) pour entraîner un convertisseur de rotation-translation qui convertit un déplacement de rotation d'entraînement en un déplacement de translation d'actionnement (B) des mâchoires (6a, b) de frein disposées sur un côté intérieur (13), non tourné vers l'actionneur électromécanique (3) de câble de traction, de la plaque d'ancrage (2), à l'intérieur d'un tambour de frein, de telle sorte qu'il puisse effectuer un déplacement d'actionnement en direction du tambour de frein, un adaptateur qui est prévu comme cadre d'une seule pièce et à paroi mince étant disposé entre l'actionneur (3) de câble de traction et la plaque d'ancrage (2) et présentant d'une part au moins une bride plane de fixation (31) qui reprend l'actionneur (3) de câble de traction, le cadre étant de l'autre côté fixé sur la plaque d'ancrage (2), **caractérisé en ce que**
le cadre est d'une seule pièce et doté de plusieurs minces entretoises (32, 33, 34) disposées angulairement et obliquement les unes par rapport aux autres et s'étendant entre la bride de fixation (31) et la plaque d'ancrage (2).

2. Module (1) de frein à tambour actionné par moteur électrique selon la revendication 1, **caractérisé en ce que** les minces entretoises (32, 33, 34) sont configurées comme plaques de paroi planes et minces qui sont reliées les unes aux autres et/ou à la bride de fixation (31) par des noeuds rigides en flexion.

3. Module (1) de frein à tambour actionné par moteur électrique selon la revendication 2, **caractérisé en ce qu'**une ou plusieurs plaques de paroi présentent une ou plusieurs découpes.

4. Module (1) de frein à tambour actionné par moteur électrique selon la revendication 2, **caractérisé en ce que** les noeuds sont rigidifiés par des entretoises.

5. Module (1) de frein à tambour actionné par moteur électrique selon la revendication 1, **caractérisé en ce que** des entretoises (32, 33, 34) de l'adaptateur (10) disposées obliquement par rapport à la plaque d'ancrage (2) reposent essentiellement en parallèle à un côté extérieur (12) de la plaque d'ancrage (2) sur la plaque d'ancrage (2) par au moins trois aires de soutien ou points de pied FP.

6. Module (1) de frein à tambour actionné par moteur électrique selon la revendication 2, **caractérisé en ce que** la bride de fixation (31) et les plaques de paroi forment un polyèdre de forme régulière ou irrégulière, en particulier tétraédrique ou pyramidale.

7. Module (1) de frein à tambour actionné par moteur électrique selon la revendication 1, **caractérisé en ce que** l'adaptateur (10) est configuré comme pièce façonnée en tôle ou comme pièce en matière synthétique.

8. Module (1) de frein à tambour actionné par moteur électrique selon l'une ou plusieurs des revendications précédentes, **caractérisé en ce qu'**un corps séparé (35) de guidage de câble de traction présentant un logement incurvé (36) pour le câble de traction est associé à l'adaptateur (10) présentant la bride de fixation (31) et présente une section transversale de guidage au moins en partie en forme de U qui présente au moins deux parois (branches du U) (37, 38) disposées l'une en face de l'autre et en relief.

9. Module (1) de frein à tambour actionné par moteur électrique selon la revendication 8, **caractérisé en ce que** le corps (35) de guidage de câble de traction est inséré en correspondance géométrique dans un logement (39) en partant d'un côté intérieur (13) de la plaque de support (2) et est chevauché par une partie du câble de traction (5).

10. Module (1) de frein à tambour actionné par moteur électrique selon les revendications 8 ou 9, **caractérisé en ce que** le corps (35) de guidage de câble de traction forme un canal rétréci de guidage de câble de traction par le fait que le câble de traction (5) est chevauché partiellement ou chevauché par un rétrécissement en entonnoir.

11. Module (1) de frein à tambour actionné par moteur électrique selon la revendication 8, **caractérisé en ce que** le corps (35) de guidage de câble de traction est réalisé en plusieurs pièces et est constitué d'un composant de maintien (40) et d'un composant (41) formant un canal de guidage du câble de traction.

12. Module (1) de frein à tambour actionné par moteur électrique selon les revendications 8 à 11, **caractérisé en ce que** le corps (35) de guidage de câble de traction est constitué au moins en partie d'une matière synthétique dans laquelle est incorporé au moins un composant solide de lubrification, le corps (35) de guidage de câble de traction étant fixé sur la plaque d'ancrage (2) en même temps que l'ensemble de soutien (11) .
